# EUROPÄISCHE PATENTSCHRIFT

(11) **EP 2 860 496 B1**
(45) Veröffentlichungstag und Bekanntmachung des Hinweises auf die Patenterteilung: **29.11.2017**
(21) Anmeldenummer: 14177604.7
(22) Anmeldetag: 18.07.2014
(51) Int. Cl.: G01D 5/245, H02K 41/02, H02K 41/03

(54) **Linearmotor**
Linear motor
Moteur linéaire

(30) Priorität: 19.07.2013 EP 13177248
(43) Veröffentlichungstag der Anmeldung: 15.04.2015
(73) Patentinhaber: NTI AG, 8957 Spreitenbach (CH)
(72) Erfinder: Rohner, Ronald, 8967 Widen (CH); Blumer, Ernst, 8053 Zürich (CH); Ludolini, Sandro, 4707 Niederbipp (CH)
(74) Vertreter: Bohest AG

(56) Entgegenhaltungen:
- EP-A1- 1 538 424
- EP-A2- 1 978 633
- US-A1- 2009 243 402
- Honeywell: "Linear Position Sensor Module", Internet , 27. Juni 2013 (2013-06-27), XP002756363, Gefunden im Internet: URL:https://web.archive.org/web/2013062706 2501/http://media.digikey.com/pdf/Data%20S heets/Honeywell%20PDFs/HMR4007.pdf [gefunden am 2016-04-12]

## Beschreibung

Die vorliegende Erfindung betrifft einen Linearmotor gemäss dem Oberbegriff des unabhängigen Patentanspruchs 1.

Linearmotoren werden in einer Vielzahl von Anwendungen in der Automatisierungstechnik, bei Verpackungsmaschinen, bei Werkzeugmaschinen sowie in anderen Bereichen eingesetzt. Unter Linearmotoren sollen im Folgenden elektrische Direktantriebe verstanden werden, die nach einem der bekannten elektromagnetischen Prinzipien funktionieren.

Ein Linearmotor umfasst einen Stator und einen relativ zu diesem Stator in Richtung von dessen Längsachse (im Folgenden auch als "in Längsrichtung" bezeichnet) bewegbaren Läufer. Die Kraft zum Antrieb des Läufers wird typischerweise dadurch erzeugt, dass eine der beiden Komponenten Stator und Läufer eine permanentmagnetische Erregung aufweist und die jeweils andere Komponente mit bestrombaren Wicklungen versehen ist, welche mit Strom beaufschlagt werden. Die permanentmagnetische Erregung wird zumeist durch diskrete Permanentmagnete erzeugt, die so angeordnet sind, dass ein in Längsrichtung periodisches Magnetfeld mit abwechselnden Nord- und Südpolen entsteht. Ob die Permanentmagnete im Stator oder im Läufer und die Wicklungen dementsprechend im Läufer bzw. im Stator vorgesehen sind, richtet sich häufig nach dem gewünschten Einsatzgebiet bzw. nach den dortigen Gegebenheiten.

Beispielsweise können die Permanentmagnete in einem rohrartig ausgebildeten Läufer angeordnet sein, wobei das Rohr aus einem unmagnetischen Material (z.B. Aluminium oder Chromstahl) hergestellt ist. Die Magnetisierung in Längsrichtung betrachtet weist beispielsweise das Muster N-S-N-S-N... auf (N = magnetischer Nordpol, S = magnetischer Südpol), sie ist also hier periodisch. Eine solche Magnetisierung kann typischerweise durch Zusammenfügen von Permanentmagnet-Scheiben, gewünschtenfalls mit zwischengefügten Eisenscheiben und/oder nichtmagnetischen Abstandshaltern, erzeugt werden. Grundsätzlich ist es aber auch möglich, anstelle von diskreten Permanentmagnet-Scheiben einen langen Magnetstab zu verwenden, der direkt in der gewünschten Art magnetisiert ist. Ein typischer Linearmotor dieser Bauart ist z.B. in US 2009/243402, EP 2 169 356 und US 6, 316, 848 beschrieben.
Derart aufgebaute Linearmotoren werden auch als tubulare Linearmotoren bezeichnet. Einer der grossen Vorteile von solchen tubularen Linearmotoren besteht darin, dass sie im Wesentlichen aus nur zwei Komponenten - dem Stator und dem Läufer - bestehen. Zusätzliche Komponenten wie Getriebe, Spindeln, Riemen oder mechanische Hebel entfallen. Somit muss sich der Anwender, das heisst der Maschinenkonstrukteur, nicht um die Ausrichtung von Wellen, Riemenscheiben oder anderen mechanischen Teilen kümmern, sondern kann den Linearmotor direkt und zielgerichtet dort einsetzen, wo eine lineare Bewegung benötigt wird. Kennzeichnend für tubulare Linearmotoren ist dabei, dass diese Motoren sehr kompakt aufgebaut sind und eine röhrenförmige Gestalt aufweisen. In den meisten Fällen ist dabei auch die Lagerung des Läufers bereits im Linearmotor bzw. in dessen Stator integriert. Dies ist besonders vorteilhaft, wenn die Platzverhältnisse in einer Vorrichtung, in welcher der Linearmotor zum Einsatz kommen soll, generell sehr eng sind und auch die Zugänglichkeit für Montage- und Ausrichtarbeiten eingeschränkt sind.
Andere Bauformen von linearen Direktmotoren sind zumeist weniger kompakt und verfügen über dedizierte Lagerungen in Form von Kugelumlauflagern, welche auf Profilschienenführungen laufen. Derartige Lagerungen sind bedeutend genauer und auch belastbarer als einfache Gleitlager, wie sie meist in tubularen Linearmotoren eingesetzt werden. Bei allen Bauformen von Linearmotoren ist man grundsätzlich frei darin, ob man den Motorteil mit den Spulenwicklungen oder den permanentmagnetisch erregten Teil des Motors bewegbar ausbildet. Bei flachen Linearmotoren ist in der Praxis zumeist der Spulenteil bewegbar, während bei tubularen Linearmotoren üblicherweise der permanentmagnetische Teil des Motors bewegbar ist. Einer der Gründe liegt wiederum in der dadurch gewonnen Einfachheit des Konzeptes: Während bei einem bewegbaren Spulenteil eine Schleppkettenführung für die Zuführung der Phasenströme benötigt wird, kann diese aufwändige und zusätzlichen Bauraum erfordernde Konstruktion bei einem feststehendem Spulenteil entfallen.

Einmal mehr zeigt sich, dass bei tubularen Linearmotoren die kompakte und einfache Konstruktion im Vordergrund steht.

Eines der Leistungsmerkmale eines Linearmotors ist die genaue Positionsregelung des Läufers, wobei diese Positionsregelung auf einer genauen Erfassung der Läuferposition relativ zum Stator basiert.

Zum Zwecke der Positionserfassung wird bei flachen Linearmotoren meist ein (extern sichtbarer) Positionssensor am bewegbaren Spulenteil (Läufer) angebracht. Parallel zu den Profilschienen zur Führung des bewegbaren Spulenteils wird ein dazugehörender Informationsträger (Sensorband) für die Positionserfassung montiert. Dieser Informationsträger besteht je nach gewähltem Prinzip aus einem Band mit optischen, magnetischen oder induktiven Informationen. Im Verhältnis zu den Profilschienen ist die Breite des Sensorbandes klein und fällt konstruktiv wenig ins Gewicht. Für die Zuführung der Verbindungsleitungen zum Positionssensor bzw. Sensorkopf am bewegbaren Spulenteil kann dieselbe Schleppkettenführung wie für die Zuführung der Motorphasenleitungen verwendet werden.

Die Positionserfassung bei tubularen Linearmotoren ist hingegen optimiert auf die kompakte und kostengünstige Bauform dieser Antriebselemente. So werden die sich im Läufer befindenden Permanentmagnete nicht nur zum Antrieb, sonderen auch als Informationsträger für die Positionserfassung verwendet. Dazu befinden sich im Stator des Linearmotors beispielsweise zwei Magnetfeldsensoren, typischerweise Hallsensoren, die in Längsrichtung um einen bestimmten Abstand versetzt angeordnet sind. Der gegenseitige Abstand dieser beiden Hallsensoren beträgt vorzugsweise ein Viertel einer magnetischen Periodenlänge. Um diesen Abstand zu garantieren, sind die Sensoren wie z.B. im Dokument US 6, 316, 848 beschrieben, in eine Halterung eingefügt und so im Stator verbaut. Die beiden Hallsensoren messen das in Längsrichtung periodische Magnetfeld (magnetische Feldstärke) und erzeugen bei einer linearen Verschiebung des Läufers relativ zum Stator (und damit auch zu den beiden Hallsensoren) zwei gleiche, aber um 90° phasenversetzte Signalverläufe. Unter Annahme eines sinusförmigen Feldverlaufes erfasst der eine Hallsensor ein Signal vom Typ A(ϕ) = A · sin(ϕ) und der andere Hallsensor ein Signal B vom Typ B(ϕ) = B · sin (ϕ-90°) = B · cos(ϕ), wobei die Amplituden A und B gleich gross sind. Das z.B. aus den Dokumenten EP 2 169 356 und US 6, 316, 848 bekannte Verfahren der Sinus-Cosinus-Auswertung der beiden um 90° versetzen Signale ermöglicht die exakte Positionsbestimmung innerhalb eines Quadranten. Diese Berechnung erfolgt mit der Formel: ϕ:=arctan(A(ϕ)/B(ϕ)). Eine weitere Auswertung des Signalverlaufes (Vorzeichen der Signale) der beiden Hallsensoren ergibt sowohl den Quadranten als auch die Richtung der Bewegung des Läufers. Das Abzählen der Magnetfeld-Perioden in Kombination mit der Position innerhalb der jeweiligen MagnetfeldPeriode ergibt dann die genaue absolute Position des Läufers (relativ zum Stator) in einem beliebig grossen Bereich des Verfahrweges. Besonders vorteilhaft bei dieser Art der Positionserfassung ist, dass die ohnehin für den Antriebe vorhandenen Permanentmagnete als Informationsträger verwendet werden können. Zudem lassen sich die Hallsensoren baulich leicht im Stator integrieren und es entfallen jegliche externe Konstruktionen oder Teile.

Das beschriebene Verfahren der Sinus-Cosinus Auswertung und des Abzählens der Magnetfeld-Perioden wird in der gleichen Form auch bei den bereits beschriebenen externen Sensorsystemen bestehend aus Sensorkopf (Positionssensor) und Sensorband eingesetzt. Gemeinsam ist dabei auch die Situation, dass die Position - im Rahmen der technischen Beschränkungen - zwar beliebig genau und auf eine beliebige Länge erfasst werden kann, aber diese jeweils nur eine relative Bezugsgrösse darstellt. "Relativ" heisst dabei, dass das Sensorsystem beim Einschalten zwar erkennt, wo innerhalb einer Periode des periodischen Magnetfelds es sich befindet, aber nicht wissen kann, um welche Periode es sich handelt. Mit anderen Worten gesagt, muss nach jedem Einschaltvorgang eine Referenzfahrt des Läufers erfolgen. Man spricht auch von Initialisierung. Beim tubularen Linearmotor wird dazu der Läufer solange in Längsrichtung verfahren, bis er entweder an einen in einer wohldefinierten Position angeordneten mechanischen Anschlag fährt oder einen in dieser wohldefinierten Position angeordneten mechanischen oder auch berührungsfreien Schalter betätigt. Sodann kann von dieser wohldefinierten Position aus eine absolute Positionserfassung (relativ zum Stator) erfolgen, indem die Anzahl der einzelnen durchfahrenen Perioden des Magnetfelds gezählt wird. Dieselben Verfahren können natürlich auch bei einem flachen Linearmotor eingesetzt werden.

Zusätzlich bieten bestimmte Sensorkopf/Sensorband-Systeme auch die Option, dass auf einer separaten Spur auf dem Sensorband eine Initialposition aufgetragen ist, die bei der Initialisierungsfahrt erfasst werden kann. Wie bereits erwähnt, muss diese Initialisierungs- oder Referenzfahrt aber bei jedem neuen Aufstarten des Motors durchgeführt werden. Alternativen in dem Sinne, dass die letzte Position in einem Permanentspeicher abgespeichert wird, scheitern daran, dass sich Linearmotoren im stromlosen Zustand frei bewegen lassen und damit die Position des Läufers relativ zum Stator im ausgeschalteten Zustand verändert werden kann. Batteriegepufferte Sensoren, bei welchen also die Positionserfassung auch bei ausgeschaltetem Antrieb weiterläuft, sind für industrielle Anwendungen meist ungeeignet.

Bei der Anwendung von Linearmotoren, welche eine Referenzfahrt ausführen müssen, muss dieser Punkt bereits bei der Konstruktion der Maschine, für welche der Linearmotor bestimmt ist, besonders beachtet werden. Denn der Läufer dieser Motoren muss aus jeder beliebigen Position in Richtung der Initialisierungsposition verfahrbar sein. Gerade bei komplexen Anwendungen, wo mehrere Linearmotoren ineinandergreifende Bewegungen ausführen, ist dies nicht einfach realisierbar und führt oftmals zu technischen Einschränkungen. Aus diesem Grund möchte man am liebsten auf eine Referenzfahrt verzichten bzw. ist der Einsatz von absoluten Positionsmesssystemen gefragt. Derartige Systeme gibt es in unterschiedlichen Ausführungen auf dem Markt.

Die häufigste Variante besteht wiederum aus einem Sensorkopf (Positionssensor) und einem Sensorband. Auf dem Sensorband sind zusätzliche Informationsspuren aufgebracht, welche in einer geeigneten Kodierung auch die absolute Position des Sensorkopfes zum Anfang des Bandes beinhalten. Eine spezielle Elektronik im Sensorkopf wertet die codierten Weginformationen aus und wandelt sie in eine standardisierte Interfaceform (zB. SSI) um, die dann ausgewertet werden kann. Andere Ausführungen gehen dahin, dass z.B. eine spezielle magnetostriktive Messwelle parallel zum Motor verbaut wird. Entlang dieser magnetostriktiven Messwelle wird vom Linearmotor ein Positionsmagnet bewegt. Wenn nun ein Stromimpuls durch die Messwelle gesendet wird, erzeugt das Magnetfeld dieses Stromimpulses zusammen mit dem Magnetfeld des Positionsmagneten über den magnetostriktiven Effekt eine mechanische Schwingung innerhalb der Messwelle. Deren Laufzeit zum Wellenende kann nun gemessen und zur absoluten Positionsauswertung verwendet werden. Weitere Prinzipien nützen z.B. Ultraschallgeber oder Potentiometerschaltungen zur Bestimmung der absoluten Position aus, wobei letztere oftmals in Form eines Messzylinders realisiert sind. Allen Prinzipien gemeinsam ist, dass parallel zum Linearmotor zusätzliche Komponenten verbaut werden müssen. Bei flachen Linearmotoren stört dies weniger, da ohnehin Führungsschienen oder ein Magnetband vorhanden sind. Wird hingegen ein tubularer Linearmotor mit einem absoluten Magnetbandsensor oder einem parallel geführten Messzylinder ausgerüstet, führt dies nebst den hohen Kosten dieser Sensorsysteme zu grossen anwendungstechnischen Einschränkungen. Die kompakte und integrierte Bauform des tubularen Linearmotors wird durch eine derartige externe absolute Positionserfassung weitgehend beeinträchtigt.

Der Erfindung liegt die Aufgabe zugrunde, einen Linearmotor der gattungsgemässen Art hinsichtlich der Positionserfassung des Läufers so zu verbessern, dass einerseits ohne Initialisierung bzw. Referenzfahrt des Läufers eine absolute Positionserfassung des Läufers (relativ zum Stator) möglich ist, und dass anderseits die für die Positionserfassung erforderlichen Messmittel wenig aufwändig sind und das Bauvolumen des Linearmotors nicht oder nur unwesentlich vergrössern, so dass insgesamt eine kompakte und integrierte Bauform des Linearmotors erreicht wird bzw. erhalten bleibt und anwendungstechnische Einschränkungen vermieden werden.

Diese Aufgabe wird durch den erfindungsgemässen Linearmotor gelöst, wie er durch die Merkmale des unabhängigen Patentanspruchs definiert ist. Bevorzugte Ausführungsvarianten des erfindungsgemässen Linearmotors ergeben sich aus den Merkmalen der abhängigen Patentansprüche.

Der erfindungsgemässe Linearmotor umfasst einen Stator, der eine Längsachse aufweist, und einen in Richtung der Längsachse relativ zum Stator zwischen zwei Endpositionen bewegbaren Läufer, wobei entweder der Stator oder der Läufer bestrombare elektrische Wicklungen aufweist und der Läufer bzw. der Stator durch ein in Richtung der Längsachse periodisches Permanentmagnetfeld erregt ist. Der Linearmotor umfasst ferner ein Positionserfassungssystem zur Erfassung der Position des Läufers relativ zum Stator. Das Positionserfassungssystem ist ein berührungslos arbeitendes Positionserfassungssystem, welches dazu ausgebildet ist, ein Signal zu erzeugen, welches der Distanz zwischen einem Bezugspunkt am Stator und einem Bezugspunkt am Läufer entspricht. Durch die berührungslose Distanzmessung zwischen Stator und Läufer können der konstruktive Aufwand und das Bauvolumen klein gehalten werden. Eine Auswerteelektronik zur Auswertung dieser Signale kann grundsätzlich Bestandteil des Linearmotors sein, sie kann aber auch Bestandteil einer externen Elektronik sein. Dies gilt in gleicher Weise für die Antriebselektronik (Bestromung der Wicklungen), die entweder ebenfalls Bestandteil des Linearmotors sein kann, häufig aber auch Bestandteil einer externen Elektronik ist. In jedem Falle lässt sich anhand der Signale mit Hilfe der Auswerteelektronik (ob nun Bestandteil des Linearmotors oder nicht) die absolute Position des Läufers relativ zum Stator bestimmen.

Gemäss der Erfindung weist der Stator die Wicklungen auf, und der Läufer ist durch das in Richtung der Längsachse periodische Permanentmagnetfeld erregt. Das Positionserfassungssystem weist innerhalb des Stators angeordnete interne Magnetfeldsensoren auf sowie ausserhalb des Stators in fester räumlicher Zuordnung zum Stator angeordnete externe Magnetfeldsensoren. Die internen und externen Magnetfeldsensoren sind zur Erfassung des Permanentmagnetfelds des Läufers am Ort des jeweiligen Magnetfeldsensors ausgebildet und zur Erzeugung von Signalen, die dem jeweils erfassten Permanentmagnetfeld entsprechen. Die internen und externen Magnetfeldsensoren sind mit der Auswerteelektronik verbunden (egal, ob diese Bestandteil des Linearmotors selbst ist oder nicht). Die Auswerteelektronik ist dazu ausgebildet, die absolute Position des Läufers relativ zum Stator aus den von den internen und externen Magnetfeldsensoren erzeugten Signalen zu bestimmen. Diese absolute Positionsbestimmung mit Hilfe interner und externer Magnetfeldsensoren ist besonders einfach realisierbar und benötigt praktisch kaum zusätzliches Bauvolumen. Weiterhin sind die internen Magnetfeldsensoren in Richtung der Längsachse um ein Viertel der Periodenlänge des periodischen Permanentmagnetfelds des Läufers versetzt zueinander angeordnet, und zwar derart, dass sie in jeder Position des Läufers von dessen periodischem Permanentmagnetfeld beaufschlagt sind. Entsprechend ist die Auswerteelektronik (ob nun Bestandteil des Linearmotors selbst oder nicht) dazu ausgebildet, die von den internen Magnetfeldsensoren erzeugten Messsignale zur Bestimmung der Position des Läufers innerhalb einer Periode des periodischen Permanentmagnetfelds auszuwerten.

Gemäss der Erfindung sind die externen Magnetfeldsensoren derart in Richtung der Längsachse entlang des Verschiebewegs des Läufers zueinander versetzt angeordnet, dass abhängig von der Position des Läufers eine unterschiedliche Anzahl der externen Magnetfeldsensoren vom periodischen Magnetfeld des Läufers beaufschlagt ist. Entsprechend ist die Auswerteelektronik (ob nun Bestandteil des Linearmotors selbst oder nicht) dazu ausgebildet, die von den externen Magnetfeldsensoren erzeugten Messsignale auszuwerten zur Bestimmung derjenigen Periode des periodischen Permanentmagnetfelds des Läufers , das die internen Magnetfeldsensoren beaufschlagt.
Zweckmässigerweise kann der Abstand zwischen je zwei benachbarten zueinander versetzten externen Magnetfeldsensoren eine halbe Periodenlänge des periodischen Permanentmagnetfelds des Läufers betragen.
Gemäss einem weiteren vorteilhaften Aspekt sind die externen Magnetfeldsensoren dazu ausgebildet, sowohl die Stärke (den Betrag) als auch die Polarität (Richtung) des periodischen Permanentmagnetfelds des Läufers zu erfassen. Der Abstand zwischen je zwei benachbarten zueinander versetzten externen Magnetfeldsensoren kann dann eine ganze Periodenlänge des periodischen Permanentmagnetfelds des Läufers betragen. Die Anzahl der erforderlichen externen Magnetfeldsensoren wird dadurch auf die Hälfte reduziert.
Dabei ist es vorteilhaft, wenn der am weitesten vom Stator entfernte externe Magnetfeldsensor so angeordnet ist, dass er ein Endmagnetfeld des Läufers erfasst . Durch diese Massnahme wird verhindert, dass in einer kritischen Position des Läufers alle Magnetfeldsensoren zugleich kein Magnetfeld messen, was eine Positionsbestimmung unmöglich machen würde. Dabei kann der am weitesten vom Stator entfernte externe Magnetfeldsensor auch dann das Endmagnetfeld messen, wenn sich der Läufer in einer kritischen Position eine Periode vor seiner Endposition befindet. Das Signal des am weitesten vom Stator entfernten Magnetfeldsensor ist dann einfach vergleichsweise schwächer als wenn der Läufer sich in einer kritischen Position unmittelbar vor seiner Endposition befindet. Dazu muss aber der am weitesten vom Stator entfernte externe Magnetfeldsensor in der Lage sein, den Betrag (Amplitude) des ihn beaufschlagenden Endmagnetfelds in ein entsprechendes Signal umzusetzen.

Gemäss der Erfindung umfasst das Positionserfassungssystem zwei Reihen von externen Magnetfeldsensoren, wobei die externen Magnetfeldsensoren der einen Reihe in Längsrichtung gegenüber den externen Magnetfeldsensoren der anderen Reihe jeweils um eine vorbestimmte Distanzversetzt angeordnet sind. Entsprechend ist die Auswerteelektronik (ob nun Bestandteil des Linearmotors selbst oder nicht) dazu ausgebildet, zur Bestimmung der Läuferposition die Signale der Magnetfeldsensoren derjenigen Reihe heranzuziehen, deren Magnetfeldsensoren (betragsmässig) höhere Feldstärken des periodischen Permanentmagnetfelds des Läufers erfassen. Denn grundsätzlich ist es möglich, dass der Läufer in einer Position ist, in welcher die eine Reihe von Magnetfeldsensoren so angeordnet ist, dass sie mit den Nulldurchgängen des Magnetfelds zusammenfällt und somit die Magnetfeldsensoren dieser Reihe kein Signal generieren, welches eine Auswertung erlaubt.
Vorzugsweise beträgt der vorbestimmte Abstand zwischen den beiden Reihen mindestens ein Achtel, vorzugsweise ein Viertel einer Periodenlänge des periodischen Permanentmagnetfelds des Läufers. Auch durch diese Massnahme wird verhindert, dass in einer kritischen Position des Läufers alle Magnetfeldsensoren zugleich kein Magnetfeld messen bzw. kein Signal generieren, was eine Positionsbestimmung unmöglich machen würde.

Wie bereits eingangs erwähnt, ist der erfindunsgemässe Linearmotor besonders vorteilhaft als tubularer Linearmotor ausgebildet. Der Läufer ist stabförmig ausgebildet und durchsetzt den Stator. Der Läufer ist innerhalb des Stators relativ zu diesem in Richtung der Längsachse verschiebbar gelagert.

Gemäss einem weiteren Aspekt eines solchen tubularen Linearmotors weist der Stator an einem Ende eine rohrförmige Verlängerung auft, welche den Läufer umschliesst. Die rohrförmige Verlängerung dient zur Montage der externen Magnetfeldsensoren (in dieser rohrförmigen Verlängerung) und zum Schutz der externen Magnetfeldsensoren. Demzufolge sind bei einem Ausführungsbeispiel des erfindungsgemässen Linearmotors die externen Magnetfeldsensoren in der rohrförmigen Verlängerung angeordnet.

Gemäss einem weiteren vorteilhaften Aspekt ist das Positionserfassungssystem als berührungslos arbeitendes Abstandsmesssystem ausgebildet, welches koaxial zum Läufer am Stator angeordnet ist und den Abstand eines aus einem Ende des Stators herausbewegten Endes des Läufers von demjenigen Ende des Stators zu bestimmen vermag, aus dem der Läufer herausbewegt ist. Das Abstandsmesssystem kann dabei beispielsweise auf Lasertechnologie, Radartechnologie oder akustischer Technologie basieren.

Gemäss einem weiteren Aspekt ist das Positionserfassungssystem als Laser-Abstandsmesssystem ausgebildet, welches eine am Stator angeordnete Laserlichtquelle und einen ebenfalls am Stator angeordneten Laserlicht-Empfänger umfasst, sowie einen an einem Ende des Läufers angeordneten Laserlicht-Reflektor. Der radiale Abstand des Laser-Abstandsmesssystem von der Längsachse kann im Bereich von 4 mm bis 40 mm liegen. Bei einem derartig geringen radialen Abstand des Laser-Abstandsmessystems von der Längsachse kann die Baugrösse des Linearmotors insgesamt erhalten bleiben, da der Radius des Stators in der gleichen Grössenordnung grösser ist als der der Läufers.

Weitere vorteilhafte Aspekte ergeben sich aus der nachfolgenden Beschreibung von Ausführungsbeispielen des erfindungsgemässen Linearmotors mit Hilfe der Zeichnung. Es zeigen:
- Fig. 1: einen vereinfachten Längsschnitt durch ein erstes Ausführungsbeispiel des erfindungsgemässen Linearmotors;
- Fig. 2a,2b: den Linearmotor aus Fig. 1 mit zwei Endstellungen seines Läufers;
- Fig. 3: einen Längsschnitt analog Fig. 1 mit Abstandsangaben;
- Fig. 4: einen typischen Verlauf des Permanentmagnetfelds über einen Abschnitt des Läufers und die zugehörigen Signale der internen Magnefeldsensoren;
- Fig. 5: ein Blockschaltbild einer Elektronik zur Positionserfassung des Läufers;
- Fig. 6: einen Längsschnitt durch ein zweites Ausführungsbeispiel des erfindungsgemässen Linearmotors;
- Fig. 7: einen Längsschnitt durch ein drittes Ausführungsbeispiel des erfindungsgemässen Linearmotors;
- Fig. 8: einen Längsschnitt durch ein viertes Ausführungsbeispiel des erfindungsgemässen Linearmotors und
- Fig. 9: einen Längsschnitt durch ein fünftes Ausführungsbeispiel des erfindungsgemässen Linearmotors.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

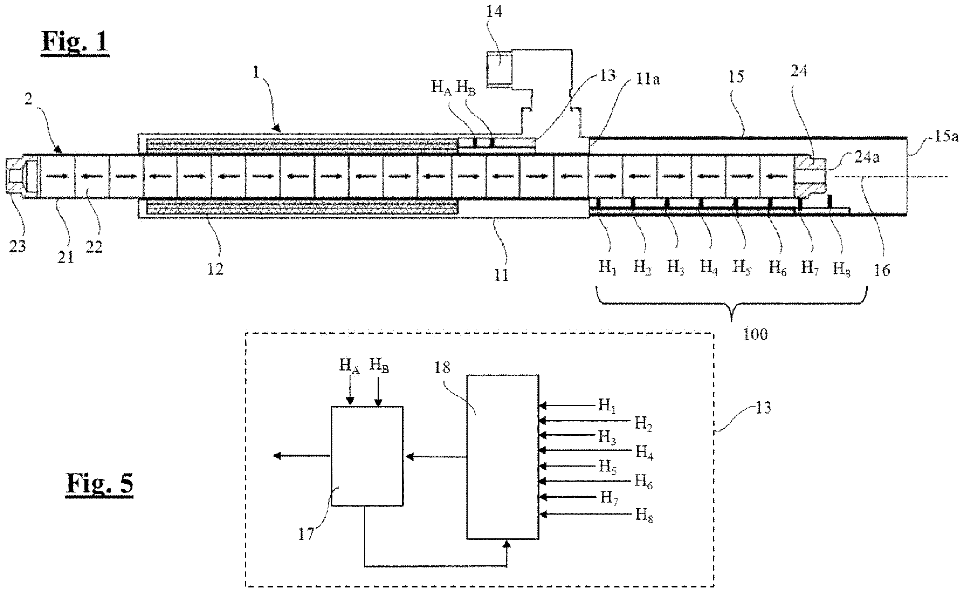

Das in **Fig. 1** dargestellte erste Ausführungsbeispiel des erfindungsgemässen Linearmotors ist als tubularer Linearmotor mit permanenterregtem Läufer ausgebildet und umfasst einen Stator 1 und einen Läufer 2, der länger ist als der Stator 1 und je nach Position mehr oder weniger aus dem Stator 1 hervorsteht.

Der Stator 1 umfasst ein Statorgehäuse 11, in welchem elektrische Wicklungen 12 und eine Elektronik 13 untergebracht sind. Die Elektronik 13 dient zur Auswertung von Signalen und zur Kommunikation mit einer externen Motorsteuerung (nicht gezeigt) und umfasst auch diverse Schutzschaltungen, sowie die weiter unten noch erläuterte Auswerteelektronik 17 zur Berechnung der Läuferposition aufgrund von der Auswerteelektronik zugeführten Messsignalen von Positionssensoren. Alternativ kann die Elektronik 13 auch so aufgebaut sein, dass sie lediglich als Kommunikationsschnittstelle zu einer externen Motorsteuerung dient und somit die Signale der im Motor untergebrachten Magnetfeldsensoren lediglich an die externe Motorsteuerung übermittelt, aber nicht selbst auswertet. Ein Stecker 14 am Statorgehäuse 11 dient zum Anschluss von elektrischen Verbindungsleitungen. An seinem hinteren Ende 11a (in Fig. 1 am rechten Ende) weist der Stator 1 eine rohrförmige Verlängerung 15 auf, welche den Läufer umschliesst und zur Unterbringung und zur Montage (Anordnung) und zum Schutz von weiter unten noch beschriebenen Komponenten eines Positionserfassungssystems dient.

Der Läufer 2 umfasst ein Chromstahl-Rohr 21, welches im Statorgehäuse 11 in Richtung von dessen Längsachse 16 (im Folgenden auch als "in Längsrichtung" bezeichnet) gleitend gelagert ist. Im Inneren des Rohrs 21 ist eine Anzahl von (hier z.B. zweiundzwanzig) Permanentmagnetscheiben 22 angeordnet, welche paarweise gegensinnig orientiert sind, so dass sie insgesamt über die Länge des Läufers 2 ein periodisches Permanentmagnetfeld erzeugen. Zwischen den einzelnen Magneten 22 können auch zusätzliche Eisenscheiben oder Abstandshalter eingefügt sein. Wesentlich ist nur, dass die Magnete 22 über die Länge des Läufers ein periodisches Magnetfeld erzeugen. Die beiden Enden des Cromstahl-Rohrs 21 sind durch Abschlussteile 23 und 24 verschlossen zum Schutz der im Chromstahl-Rohr 21 angeordneten Permanentmagnetscheiben 22.

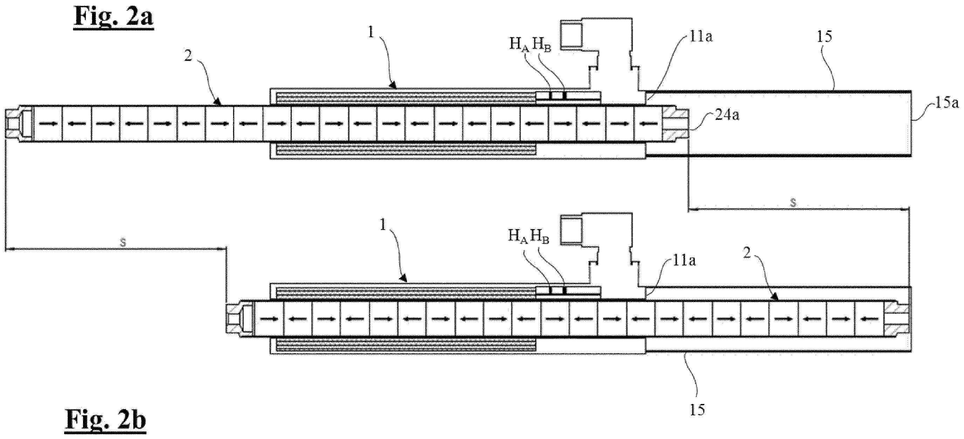

Durch geeignete Bestromung der Wicklungen 12 kann der Läufer 2 in an sich bekannter Weise in Richtung von dessen Längsachse 16 in der einen oder der anderen Richtung bewegt werden (in Fig. 1 also nach links oder nach rechts). **Fig. 2a** und **Fig. 2b** zeigen jeweils den Linearmotor mit voll ausgefahrenem Läufer (Fig. 2a) bzw. mit voll eingefahrenem Läufer (Fig. 2b). Daraus ergibt sich der maximale Verschiebeweg s bzw. Hub des Läufers 2. Wie aus Fig. 2b ersichtlich ist, ist die rohrförmige Verlängerung 15 des Stators 1 gerade so lange, dass sie den im vollständig eingefahrenen Zustand aus dem Stator 1 herausragenden hinteren Abschnitt des Läufers 2 vollständig aufnimmt.

Durch die rohrförmige Verlängerung 15 des Stators wirkt der Linearmotor zwar optisch grösser, anwendungstechnisch verändert sich aber gegenüber einem Linearmotor ohne eine solche rohrförmige Verlängerung 15 nur wenig, da der Raum hinter dem Stator 1 ohnehin für den Läufer 2 frei gehalten werden muss. Einzig der Durchmesser des benötigten Freiraumes hinter dem Stator 1 ist durch diese rohrförmige Verlängerung geringfügig grösser.

Abgesehen von der rohrförmigen Verlängerung 15 des Stators 1 ist der erfindungsgemässe Linearmotor soweit bezüglich Konstruktion und Funktionsweise konventionell ausgebildet und bedarf daher keiner näheren Erläuterung. Die Unterschiede des erfindungsgemässen Linearmotors gegenüber bekannten Linearmotoren liegen in der Art und Weise der Positionserfassung des Läufers 2 bzw. in den dazu eingesetzten Mitteln zur Positionserfassung, worauf im Folgenden im Detail eingegangen wird.

Das Positionserfassungssystem des Läufers 2 basiert bei dem gezeigten Ausführungsbeispiel des erfindungsgemässen Linearmotors auf der Ausmessung des periodischen Permanentmagnetfelds des Läufers 2 mittels Magnetfeldsensoren und Auswertung der von den Magnetfeldsensoren erzeugten Signale. Als Magnetfeldsensoren werden dabei vorzugsweise Hallsensoren eingesetzt, und im Folgenden wird daher nur noch von Hallsensoren gesprochen. Vorausgesetzt wird dabei, dass die Magnetfeldsensoren bzw. Hallsensoren nicht nur die Stärke des Magnetfelds, sondern auch dessen Polarität (N bzw. S) erfassen können. Als Bezugspunkt des Stators 1 dient das Gehäuseende 11a, als Bezugspunkt des Läufers 2 dessen hinteres Ende 24a.

Das Positionserfassungssystem umfasst mehrere Magnetfeld- bzw. Hallsensoren, die in zwei Gruppen unterteilt sind. Eine erste Gruppe von Hallsensoren umfasst zwei Hallsensoren H_{A} und H_{B}, die innerhalb des Statorgehäuses 11 angeordnet sind und unabhängig von der aktuellen Position des Läufers 2 immer von dem periodischen Magnetfeld des Läufers 2 beaufschlagt sind. Diese beiden Hallsensoren H_{A} und H_{B} der ersten Gruppe von Hallsensoren sind im Folgenden als interne Hallsensoren bezeichnet. Eine zweite Gruppe von Hallsensoren umfasst eine Anzahl weiterer Hallsensoren H₁-H₈, welche ausserhalb des Statorgehäuses 11 in fester räumlicher Zuordnung zum Stator in der rohrförmigen Verlängerung 15 angeordnet sind und das periodische Magnetfeld des je nach Position des Läufers 2 mehr oder weniger aus dem Gehäuse 11 herausragenden hinteren Läuferabschnitts erfassen. Diese Hallsensoren H₁-H₈ sind im Folgenden als externe Hallsensoren bezeichnet. Die Gesamtheit der internen und externen Hallsensoren gehören zu dem Positionserfassungssystem 100.

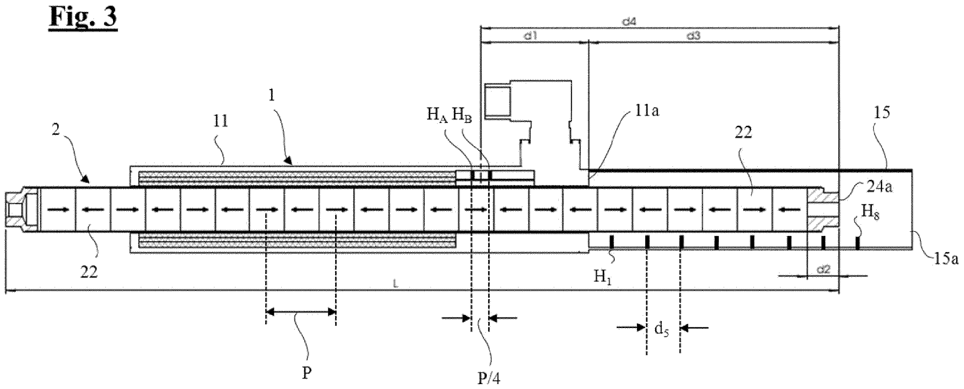

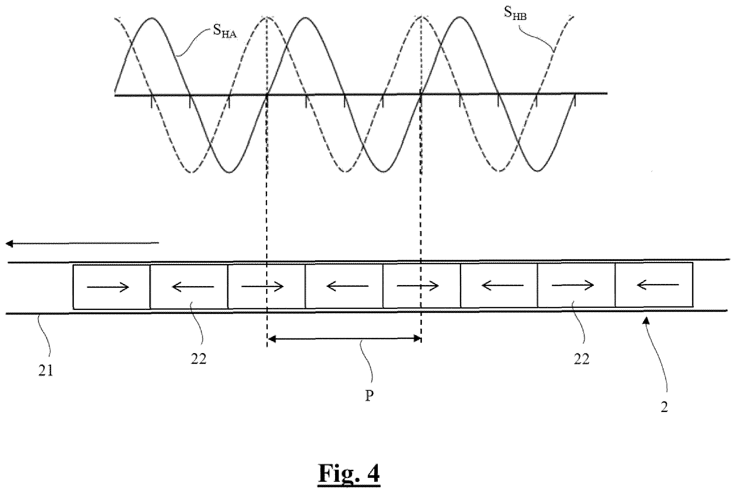

Die beiden internen Hallsensoren H_{A} und H_{B} sind, wie aus **Fig. 3** ersichtlich ist, in einem definierten Abstand d₁ vom hinteren Ende 11a des Statorgehäuses 11 angeordnet. Untereinander sind die beiden internen Hallsensoren H_{A} und H_{B} in Längsrichtung des Stators 1 um ein Viertel der magnetischen Periode P des Permanentmagnetfelds des Läufers 2 versetzt. Wenn sich der Läufer 2 an den beiden internen Hallsensoren vorbeibewegt, erzeugen diese beiden Hallsensoren das in Fig. 4 dargestellte im Wesentlichen sinusförmige bzw. cosinusförmige Signal S_{HA} bzw. S_{HB}, diese beiden Signale sind also um eine Viertelperiode bzw. 90° phasenverschoben relativ zueinander. Die beiden internen Hallsensoren dienen in an sich bekannter Weise (siehe z.B. EP 2 169 356 und US 6, 316, 848) zur Bestimmung der relativen Position des Läufers 2 innerhalb einer Magnetfeldperiode, wobei sich diese relative Position (bzw. Phasenlage) innerhalb eines Quadranten der Magnetfeldperiode aus dem Quotienten der beiden Signale S_{HA} bzw. S_{HB} nach der Formel x = arctan(S_{HA} / S_{HB}) · P / 2 π berechnet, worin P die Länge einer Periode (Periodenlänge) des periodischen Permanentmagnetfelds des Läufers 2 ist. Aus den Vorzeichen der beiden Signale S_{HA} und S_{HB} kann der jeweilige Quadrant ermittelt werden. Die Positionsberechnung erfolgt in einer vorzugsweise mikroprozessorbasierten Auswerteelektronik 17, der die Signale der beiden internen Hallsensoren H_{A} und H_{B} zugeführt werden. Die Auswerteelektronik 17 kann baulich in die Elektronik 13 (Fig. 5) integriert sein, die Bestandteil des Linearmotors selbst sein kann, aber auch als externe Elektronik (Motorsteuerung) ausgebildet sein kann, sodass die Auswerteelektronik 17 dann in dieser externen Elektronik integriert ist.
Die letzte (hinterste) Permanentmagnetscheibe 22 hat vom hinteren mechanischen Ende 24a des Läufers 2 einen Abstand d₂, der Läufer 2 hat insgesamt eine (Gesamt-) Länge L. Die Abstände d₁ und d₂ sowie die Länge L des Läufers, die Anzahl von Permanentmagnetscheiben 22 und die Periodenlänge P des periodischen Permanentmagnetfelds sind bekannt. Für die (auf den Stator 1 bezogene) absolute Positionserfassung des Läufers 2 wird das hintere Ende 11a des Statorgehäuses 11 als Bezugspunkt angenommen. Der Bezugspunkt des Läufers 2 ist dessen hinteres Ende 24a. Es gilt dann, den Abstand d₃ des hinteren Läuferendes 24a zum hinteren Ende 11a des Statorgehäuses 11 bzw. den Abstand d₄ zu den beiden im Stator 1 verbauten internen Hallsensoren H_{A} und H_{B} zu bestimmen. Sind diese Abstände d₃ und d₄ bestimmt, so ist die absolute Position des Läufers 2 gegenüber dem Stator 1 bestimmt, und auf eine Referenzfahrt kann gänzlich verzichtet werden. Dabei genügt es, wenn bestimmt werden kann, in der wievielten magnetischen Periode des periodischen Permanentmagnetfleds des Läufers sich die beiden internen Hallsensoren befinden. Die genaue Position innerhalb dieser Periode wird durch die internen Hallsensoren H_{A} und H_{B} bestimmt.

In Fig. 1 und Fig. 3 ist beispielsweise eine axiale Verschiebung zwischen dem Läufer 2 und dem Stator 1 dargestellt, bei der sich drei Perioden des periodischen Permanentmagnetfelds des Läufers 2 ausserhalb des Statorgehäuses 11 befinden und sich somit (in diesem Beispiel) die beiden internen Hallsensoren in der fünften Periode des periodischen Permanentmagnetfelds des Läufers 2 befinden. Aufgrund der bekannten mechanischen Abmessungen von Läufer, Stator und Permanentmagnetscheiben bzw. der Periodenlänge des periodischen Permanentmagnetfelds kann nun direkt die absolute axiale Lage des Läufers 2 relativ zum Stator 1 berechnet werden. Wenn sich die internen Hallsensoren H_{A} und H_{B} (vom hinteren Läuferende aus gesehen) in der n-ten Periode des periodischen Permanentmagnetfelds befinden, beträgt die Distanz d₃ = n*P - x - d₁ + d₂, wobei x die Position der internen Hallsensoren innerhalb der n-ten Periode ist.

Zur Bestimmung der aktuellen Periode des periodischen Permanentmagnetfelds des Läufers 2 dienen die externen, in der Verlängerung 15 des Stators 1 angeordneten Hallsensoren H₁ -H₈. Mittels dieser externen Hallsensoren H₁ -H₈ wird ermittelt, wieviele Perioden des periodischen Permanentmagnetfelds des Läufers 2 aus dem hinteren Ende 11a des Statorgehäuses 11 (bzw. dem hinteren Ende des Stators 1) herausragen. Anhand des Abstands d₁ der internen Hallsensoren H_{A}, H_{B} vom hinteren Ende 11a des Statorgehäuses und der Periodenlänge P ergibt sich damit, in der wievielten Periode des periodischen Permanentmagnetfelds des Läufers sich die beiden internen Hallsensoren H_{A} und H_{B} befinden.

Die externen Hallsensoren H₁ -H₈ sind in Längsrichtung hintereinander jeweils in einem Abstand d₅ voneinander angeordnet, welcher genau einer halben Periodenlänge P bzw. einer Polteilung entspricht. Die Signale der externen Hallsensoren H₁ -H₈ werden über einen Multiplexer 18 der Auswerteelektronik 17 zugeführt, wie dies in **Fig. 5** gezeigt ist. Mittels des Multiplexers 18 können die Signale der einzelnen Hallsensoren H₁ - H₈ sequentiell auf einen in der Auswerteelektronik 17 enthaltenen Analog/Digital-Wandler (A/D-Wandler) geführt werden, so dass sich der elektronische Aufwand trotz mehrerer Hallsensoren in Grenzen hält. Da diese Positionserfassung nur einmal nach dem Aufstarten des Systems durchgeführt werden muss, das heisst, der Läufer 2 sich zu diesem Zeitpunkt auch noch nicht bewegt, ist die Auswertung der Sensorsignale nicht zeitkritisch. Die Auswertelektronik detektiert, welcher oder welche der externen Hallsensoren H₁ -H₈ (noch) ein Magnetfeld messsen. Aufgrund der Auswertung der Sensorsignale ergibt sich dann, wie viele Polteilungen bzw. Magnete des Läufers 2 aus dem Ende 11a des Statorgehäuses 11 herausragen, bzw. in welcher magnetischen Periode sich die beiden internen Hallsensoren H_{A}, H_{B} im Stator gegenüber dem (hinteren) Ende des Läufers befinden.

Die Anzahl der externen Magnetfeldsensoren richtet sich nach der maximalen Anzahl von Perioden bzw. Polteilungen des periodischen Permanentmagnetfelds des Läufers, die aus dem hinteren Ende 11a des Statorgehäuses 11 herausragen können. Bei Magnetfeldsensoren, welche nur die Stärke des Magnetfelds, nicht aber dessen Polarität erfassen können, müssen pro Periode des periodischen Permanentmagnetfelds zwei Sensoren vorgesehen sein. Im Falle von Hallsensoren, welche auch die Polarität des Magnetfelds messen, genügt es, wenn pro Periode ein Sensor vorhanden ist, da jeweils aufgrund der Feldrichtung (Polarität) erkannt werden kann, ob sich der erste oder zweite Magnet der jeweiligen magnetischen Periode vor dem jeweiligen Sensor befindet (Voraussetzung ist natürlich, dass die Magnete im Läufer immer in gleicher Weise gerichtet eingebaut sind, also dass beispielsweise der letzte Magnet immer mit Norden gegen die Läuferinnenseite montiert wird). Der Abstand dieser Hallsensoren voneinander beträgt dann jeweils genau eine Periodenlänge des periodischen Permanentmagnetfelds des Läufers.

Die nachstehende Tabelle zeigt die durch die Hallsensoren H₁ bis H₈ detektierten Magnetfelder, abhängig von der Anzahl der Polteilungen bzw. Magnete, die aus dem Ende 11a des Statorgehäuses 11 herausragen. Dabei sind die analogen Messsignale der Hallsensoren gemäss ihrem Vorzeichen digitalisiert und als Nord ("N") oder als Süd ("S") in die Tabelle eingetragen. Wie leicht ersichtlich ist, genügt es, jeweils nur die ungeraden, gegenseitig um eine Periodenlänge beabstandeten Hallsensoren H₁, H₃, H₅ und H₇ auszuwerten, um zu bestimmen, in welcher Polteilung sich der Läufer befindet (siehe rechte Seite der Tabelle). Dabei wird vorausgesetzt, dass - wie dies üblicherweise bei Hallsensoren der Fall ist - nicht nur die Stärke sondern auch die Polarität des Magnetfeldes gemessen werden kann.

**Tabelle**

| **Polteilung** | **H1** | **H2** | **H3** | **H4** | **H5** | **H6** | **H7** | **H8** | | **H1** | **H3** | **H5** | **H7** |
|---|---|---|---|---|---|---|---|---|---|---|---|---|---|
| 0 | - | - | - | - | - | - | - | - | | - | - | - | - |
| 1 | N | - | - | - | - | - | - | - | | N | - | - | - |
| 2 | S | N | - | - | - | - | - | - | | S | - | - | - |
| 3 | N | S | N | - | - | - | - | - | | N | N | - | - |
| 4 | S | N | S | N | - | - | - | - | | S | S | - | - |
| 5 | N | S | N | S | N | - | - | - | | N | N | N | - |
| 6 | S | N | S | N | S | N | - | - | | S | S | S | - |
| 7 | N | S | N | S | N | S | N | - | | N | N | N | N |
| 8 | S | N | S | N | S | N | S | N | | S | S | S | S |

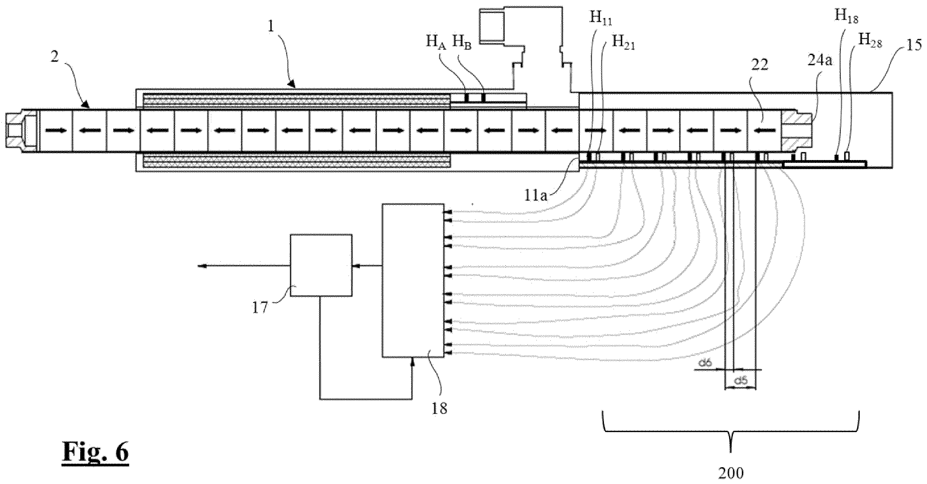

Falls der Läufer zufällig eine kritische Position einnimmt, in der sich die einzelnen externen Hallsensoren mittig zu den einzelnen Magneten und damit genau im Nulldurchgang des magnetischen Feldes befinden, versagt die zuvor beschriebene Auswertung, da dann alle Hallsensoren kein Magnetfeld messen. Das nachstehend anhand von Fig. 6 beschriebene zweite Ausführungsbeispiel des erfindungsgemässen Linearmotors kommt mit diesem Sonderfall sehr einfach zurecht.

Das zweite Ausführungbeispiel des erfindungsgemässen Linearmotors gemäss **Fig. 6** unterscheidet sich von dem ersten Ausführungsbeispiel des erfindungsgemässen Linearmotors aus Fig. 1 dadurch, dass es zwei Reihen von in der Verlängerung 15 des Statorgehäuses 11 angeordneten externen Hallsensoren aufweist. Die externen Hallsensoren der ersten Reihe sind mit H₁₁ - H₁₈ und die externen Hallsensoren der zweiten Reihe sind mit H₂₁ - H₂₈ bezeichnet. Innerhalb jeder Reihe beträgt der Abstand d₅ zwischen zwei Hallsensoren wieder genau eine Polteilung bzw. eine halbe Periodenlänge des periodischen Permanentmagnetfelds des Läufers. Die beiden Reihen sind jedoch in Längsrichtung um einen Anstand d₆ gegeinander versetzt, der beispielsweise etwa ein Achtel der Magnetfeldperiodenlänge P beträgt (entsprechend einem Winkel von 45° bzw. π/4). Auf diese Weise ist sichergestellt, dass bei jeder Position des Läufers zumindest von den Hallsensoren einer der beiden Reihen ein Magnetfeld erfasst wird, welches ausgewertet werden kann. Die Signale der beiden Reihen von Hallsensoren werden wiederum über den Multiplexer 18 der Auswerteelektronik 17 zugeführt. Die Auswertung erfolgt z.B. so, dass je nach Signalstärke entweder die Hallsensorreihe H₁₁ -H₁₈ oder die Hallsensorreihe H₂₁ -H₂₈ herangezogen wird. Dazu werden die Absolutwerte der Signale innerhalb jeder Reihe von Hallsensoren gemittelt und die Signale derjenigen Reihe, die einen grösseren gemittelten Wert liefert, werden für die Berechnung verwendet. Werden die beiden Hallsensorreihen in einem vorteilhaften Abstand von einem Viertel der Magnetfeldperiodenlänge (entsprechend einem Winkel von 90° bzw. π/2) angeordnet, so kann innerhalb der Periode sogar der Quadrant bestimmt werden, in welcher sich Stator und Läufer befinden. Dies hat Vorteile bei der weiteren Auswertung der genauen Position. Bezüglich der Anzahl der erforderlichen Hallsensoren bzw. allgemein Magnetfeldsensoren in jeder Reihe gelten dieselben Überlegungen wie weiter oben im Zusammenhang mit dem ersten Ausführungsbeispiel dargelegt. Die Gesamtheit der internen und externen Hallsensoren gehören zu dem Positionserfassungssystem 200 . Für die (auf den Stator 1 bezogene) absolute Positionserfassung des Läufers 2 wird wieder das hintere Ende 11a des Statorgehäuses 11 als Bezugspunkt angenommen. Der Bezugspunkt des Läufers 2 ist wiederum dessen hinteres Ende 24a.

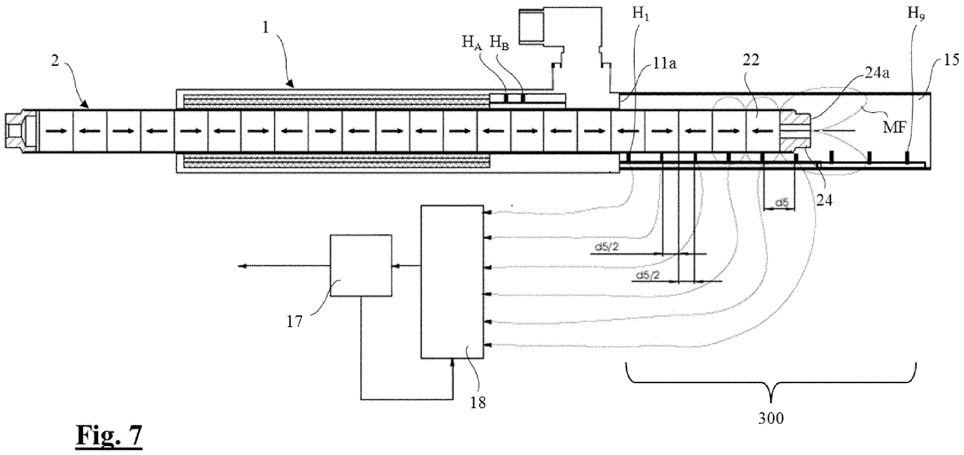

Bei dem in **Fig. 7** dargestellten dritten Ausführungsbeispiel des erfindungsgemässen Linearmotors wird das spezielle Magnetfeld am (hinteren) Ende des Läufers 2 zur Positionsbestimmung im Falle, dass sich alle Hallsensoren im Nulldurchgang des periodischen Magnetfelds befinden, verwendet. Entgegen dem mehr oder weniger sinusförmigen Feldverlauf zwischen den einzelnen Magneten ergibt sich dort ein auskragendes Magnetfeld MF beim letzten Permanentmagneten 22 im Läufer 2. Dieses auskragende Magnetfeld MF dehnt sich räumlich weiter als eine normale Polteilung aus. Wird nun in der Verlängerung 15 des Statorgehäuses 11 ein Hallsensor mehr vorgesehen als Polteilungen detektiert werden sollen, so ist der beschriebene Sonderfall abgedeckt. Konkret wird durch die Auswerteelektronik 17 folgende Auswertung durchgeführt: Zeigen bis auf einen Hallsensor alle anderen Hallsensoren kein Messsignal, dann befindet sich der Läufer in derjenigen Polteilung, die um eine Position vor dem einen Hallsensor liegt, der das (einzige) Signal anzeigt.

Um diese Form der Auswertung durchzuführen, muss jeweils im Abstand der Polteilung je ein Hallsensoren verbaut werden, und zwar insgesamt ein Hallsensor mehr als Polteilungen bzw. Magnete detektiert werden sollen. Im gezeigten dritten Ausführungsbeispiel sind neun externe Hallsensoren H₁ -H₉ vorhanden. Grundsätzlich ist es auch möglich, wie weiter oben erläutert, nur Hallsensoren im Abstand einer Periodenlänge zu verbauren, das heisst also nur die ungeradzahligen Hallsensoren H₁, H₃, H₅, etc.. Dabei müsste im kritischen Fall eine Amplitudenauswertung des einzigen ein Signal liefernden Hallsensors erfolgen. Sofern dessen Ampltide vergleichsweise gross ist, befindet sich der Läufer in derjenigen Polteilung, die um eine Position vor diesem einen Hallsensor liegt. Ist die Amplitude vergleichsweise klein (aber gleichwohl messbar), dann befindet sich der Läufer in derjenigen Polteiliung, die um zwei Positionen vor diesem einen Hallsensor liegt.

Abgesehen von der Anzahl der externen Hallsensoren und der speziellen Auswertung ihrer Signale entspricht der Linearmotor der Fig. 7 demjenigen aus Fig. 1, so dass keine weiteren Erläuterungen erforderlich sind. Die Gesamtheit der internen und externen Hallsensoren gehören zu dem Positionserfassungssystem 300. Für die (auf den Stator 1 bezogene) absolute Positionserfassung des Läufers 2 wird wieder das hintere Ende 11a des Statorgehäuses 11 als Bezugspunkt angenommen. Der Bezugspunkt des Läufers 2 ist wiederum dessen hinteres Ende 24a.

Das oben erwähnte Problem der kritischen Läuferposition, bei der alle externen Hallsensoren kein Magnetfeld messen, kann auch dadurch gelöst werden, dass der Läufer aus der kritischen Läuferposition geringfügig in axialer Richtung bewegt wird, und zwar so weit, bis die Hallsensoren genügend grosse Magnetfelder messen und enstprechende Signale generieren. In der Praxis kann dabei eine Bewegung in der Grössenordnung von etwa 5% einer Polteilung ausreichen. Nachteilig ist dabei aber, dass quasi eine Minireferenzfahrt notwendig wird, was in manchen Anwendungen nicht akzeptabel sein kann.

Bei den vorstehend beschriebenen Ausführungsbeispielen des erfindungsgemässen Linearmotors wird die Positionsinformation aus dem ohnehin vorhandenen Permanentmagnetfeld des Läufers abgeleitet, was eine wenig aufwändige und deshalb relativ kostengünstige Erfassung der absoluten Läuferposition ermöglicht.

Grundsätzlich lässt sich die Erfindung aber auch so ausführen, dass anstelle der externen Hallsensoren eine andere Messanordnung für die Erfassung der Position des Läuferendes eingesetzt wird. So könnten z. B. optische oder induktive Sensoren das Läuferende detektieren.

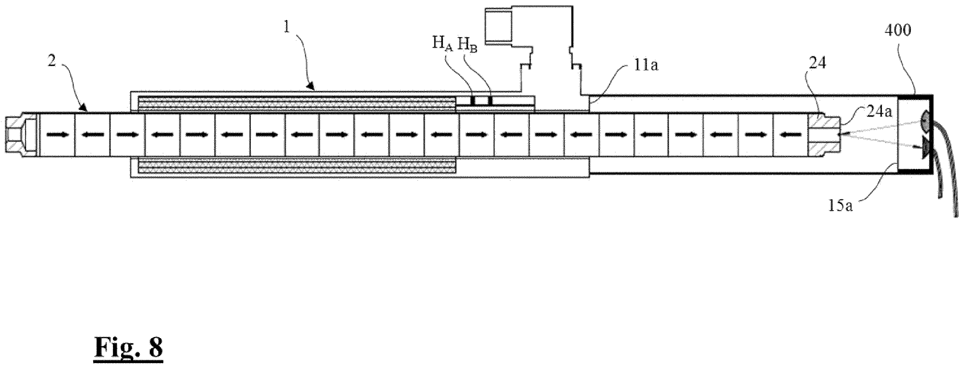

Gemäss einem vierten, in **Fig. 8** gezeigten Ausführungsbeispiel wird die Position des (hinteren) Läuferendes axial vermessen. Dazu ist am Ende 15a der rohrförmigen Verlängerung 15 des Statorgehäuses 11 (und damit in fester örtlicher Zuordnung zu diesem) ein berührungslos messendes Abstandsmesssystem 400 angeordnet, welches den Abstand zwischen dem Ende 15a der rohrfömrigen Verlängerung 15 des Statorgehäuses 11 und dem mechanischen Ende 24a des Läufers 2 misst. Der Bezugspunkt des Stators 1 ist dabei das am Ende 15a der Verlängerung 15 montierte Abstandsmesssystem 400 und damit wegen der vorgegebenen Länge der Verlängerung 15 indirekt wieder das hintere Ende 11a des Statorgehäuses 11 (und damit des Stators 1). Der Bezugspunkt des Läufers 2 ist dessen hinteres Ende 24a. Das Abstandsmesssystem 400 kann auf z.B. Lasertechnologie, Radartechnologie oder akustischer Messtechnologie basieren. Im allgemeinen Fall ist aber die axiale Erfassung der Läuferendposition eher nachteilig, da sich so die ohnehin oft kritische Einbaulänge des Linearmotors vergrössert.

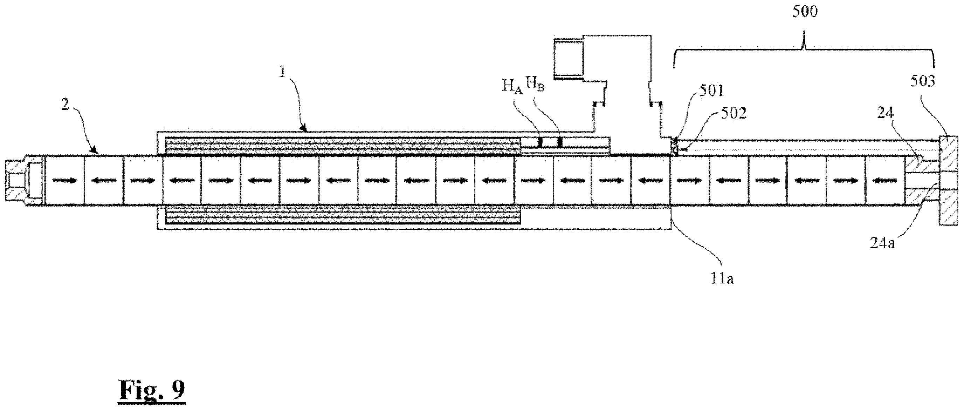

In **Fig. 9** ist ein fünftes, besonders vorteilhaftes Ausführungsbeispiel des erfindungsgemässen Linearmotors dargestellt. Hierbei wird der Abstand des (hinteren) Läuferendes zum Stator 1 bzw. dem hinterem Ende 11a des Statorgehäuses 11 als Bezugspunkt mittels eines seitlich knapp neben dem Läufer 2 angeordneten Laser-Abstandsmesssystems 500 gemessen. Der radiale Abstand des Laser-Abstandsmesssystems 500 vom Läufer 2 ist möglichst gering und beträgt vorzugsweise nur wenige Millimeter (beispielsweise 4 mm bis 40 mm), so dass sich das Bauvolumen des Linearmotors dadurch nicht oder jedenfalls nicht substanziell vergrössert. Das Laser-Abstandsmesssystem umfasst eine am Ende 11a des Statorgehäuses 11 angeordnete Laserlicht-Quelle 501 und einen ebenfalls am Statorgehäuseende 11a angeordneten Laserlicht-Empfänger 502 sowie einen scheibenförmigen Laserlicht-Reflektor 503, welcher am Abschlussteil 24 des hinteren Endes des Läufers 2 montiert ist. Die Laserlicht-Quelle 501 richtet einen Laserstrahl auf den Laserlicht-Reflektor 503 und dieser reflektiert den Laserstrahl auf den Laserlicht-Empfänger 502 zurück. Solche Laser-Abstandsmesssysteme sind an sich bekannt, so dass sich eine nähere Erläuterung erübrigt. Mittels der für solche Laser-Abstandsmesssysteme üblichen Auswerteverfahren kann dann die Distanz des Läuferendes vom Stator ermittelt bzw. die Lage des Läufers in Bezug auf die Polteilung bestimmt werden. In diesem Ausführungsbeispiel ist der Bezugspunkt des Stators 1 wieder durch das Ende 11a des Statorgehäuses 11 gegeben, der Bezugspunkt des Läufers 2 ist dessen hinteres Ende 24a mit dem daran montierten reflektierenden scheibenförmigen Laserlicht-Reflektor 503. Bei diesem Ausführungsbeispiel des Linearmotors kann, muss aber nicht notwendigerweise, die rohrförmige Verlängerung des Statorgehäuses entfallen.

Bei den beiden letzten, in Fig. 8 und Fig. 9 dargestellten Ausführungsbeispielen des erfindungsgemässen Linearmotors sind unter der Voraussetzung, dass das Abstandsmesssystem 400 bzw. 500 ausreichend präzise und hoch genug auflösend ist, die internen Hallsensoren H_{A} und H_{B} nicht erforderlich. Vorteilhafterweise sind die internen Hallsensoren aber auch bei diesen Ausführungsbeispielen vorhanden, wobei die initiale absolute Positionsmessung mittels des Abstandsmesssystems 400 bzw. 500 erfolgt und alle weiteren Positionsmessungen in bekannter Weise auf der Basis der von den internen Hallsensoren erzeugten Messsignale durchgeführt wird. Bei Einsatz eines weniger präzisen bzw. weniger fein auflösenden Abstandsmesssystems 400 bzw. 500 kann dieses dazu benutzt werden, lediglich die Magnetfeldperiode zu bestimmen, in welcher sich die internen Hallsensoren befinden. Die genaue Position innerhalb der Periode wird dann wieder wie bei den Ausführungsbeispielen von Fig. 1 bis Fig. 7 anhand der Messsignale der internen Hallsensoren bestimmt.

Die Erfindung ist vorstehend am Beispiel von tubularen Linearmotoren erläutert, bei denen die Wicklungen im Stator untergebracht sind und der Läufer über eine Permanenterregung verfügt. Die erfindungsgemässe absolute Positionsbestimmung des Läufers in Bezug auf den Stator kann jedoch sinngemäss auch bei anderen Bauformen von Linearmotoren eingesetzt werden.

## Patentansprüche

1. Linearmotor mit einem Stator (1), der eine Längsachse (16) aufweist, und mit einem in Richtung der Längsachse (16) relativ zum Stator (1) zwischen zwei Endpositionen bewegbaren Läufer (2), wobei der Stator (1) bestrombare elektrische Wicklungen (12) aufweist und der Läufer (2) durch ein in Richtung der Längsachse (16) periodisches Permanentmagnetfeld erregt ist, sowie mit einem Positionserfassungssystem (100; 200; 300; 400; 500) zur Erfassung der Position des Läufers (2) relativ zum Stator (1), wobei das Positionserfassungssystem (100; 200; 300; 400; 500) ein berührungslos arbeitendes Positionserfassungssystem ist, welches dazu ausgebildet ist, ein Signal zu erzeugen, welches der Distanz zwischen einem Bezugspunkt (11a; 15a) am Stator (1) und einem Bezugspunkt (24a) am Läufer (2) entspricht, wobei das Positionserfassungssystem (100; 200; 300) ausserhalb des Stators (1) in fester räumlicher Zuordnung zum Stator angeordnete externe Magnetfeldsensoren (H₁₁-H₂₈) aufweist, welche zur Erfassung des Permanentmagnetfelds des Läufers (2) am Ort des jeweiligen Magnetfeldsensors und zur Erzeugung von dem jeweils erfassten Permanentmagnetfeld entsprechenden Signalen ausgebildet sind und derart in Richtung der Längsachse (16) entlang des Verschiebewegs des Läufers (2) zueinander versetzt angeordnet sind, dass abhängig von der Position des Läufers (2) eine unterschiedliche Anzahl der externen Magnetfeldsensoren (H₁₁-H₂₈) vom periodischen Magnetfeld des Läufers beaufschlagt ist, **dadurch gekennzeichnet, dass** das Positionserfassungssystem (200) innerhalb des Stators (1) angeordnete interne Magnetfeldsensoren (H_{A}, H_{B}) aufweist, welche zur Erfassung des Permanentmagnetfelds des Läufers (2) am Ort des jeweiligen Magnetfeldsensors und zur Erzeugung von dem jeweils erfassten Permanentmagnetfeld entsprechenden Signalen ausgebildet sind und welche in Richtung der Längsachse (16) um ein Viertel der Periodenlänge (P) des periodischen Permanentmagnetfelds des Läufers (2) versetzt zueinander angeordnet sind derart, dass sie in jeder Position des Läufers (2) von dessen periodischem Permanentmagnetfeld beaufschlagt sind, und wobei das Positionserfassungssystem (200) zwei Reihen der externen Magnetfeldsensoren (H₂₁-H₂₈) umfasst, wobei die externen Magnetfeldsensoren (H₁₁-H₁₈) der einen Reihe in Längsrichtung gegenüber den externen Magnetfeldsensoren (H₂₁-H₂₈) der anderen Reihe jeweils um eine vorbestimmte Distanz (d₆) versetzt angeordnet sind, um zu verhindern, dass in einer kritischen Position des Läufers (2) alle externen Magnetfeldsensoren (H₁₁-H₂₈) zugleich kein Magnetfeld messen.

2. Linearmotor nach Anspruch 1, wobei der Abstand zwischen je zwei benachbarten zueinander versetzten externen Magnetfeldsensoren (H₁₁-H₂₈) innerhalb einer Reihe eine halbe Periodenlänge (P) des periodischen Permanentmagnetfelds des Läufers (2) beträgt.

3. Linearmotor nach Anspruch 1, wobei die externen Magnetfeldsensoren (H₁₁-H₂₈) dazu ausgebildet sind, sowohl die Stärke als auch die Polarität des Magnetfelds des Läufers (2) zu erfassen, und wobei der Abstand zwischen je zwei benachbarten zueinander versetzten externen Magnetfeldsensoren (H₁₁-H₂₈) innerhalb einer Reihe eine ganze Periodenlänge (P) des periodischen Permanentmagnetfelds des Läufers (2) beträgt.

4. Linearmotor nach einem der Ansprüche 1 bis 3, wobei der vorbestimmte Abstand (d₆) zwischen den beiden Reihen mindestens ein Achtel, vorzugsweise ein Viertel einer Periodenlänge (P) des periodischen Permanentmagnetfelds des Läufers (2) beträgt.

5. Linearmotor nach einem der Ansprüche 1 bis 4, wobei der Linearmotor als tubularer Linearmotor ausgebildet ist, dessen Läufer (2) stabförmig ausgebildet ist und den Stator (1) durchsetzt, und wobei der Läufer (2) innerhalb des Stators relativ zu diesem in Richtung der Längsachse (16) verschiebbar gelagert ist.

6. Linearmotor nach Anspruch 5, wobei der Stator (1) an einem Ende eine rohrförmige Verlängerung (15) aufweist, welche den Läufer (2) umschliesst.

7. Linearmotor nach Anspruch 6, wobei in der rohrförmigen Verlängerung (15) die externen Magnetfeldsensoren (H₁-H₈; H₁₁-H₂₈; H₁-H₉) angeordnet sind.

## Claims

1. Linear motor comprising a stator (1) which has a longitudinal axis (16), and an armature (2) which is movable relative to the stator (1) between two end positions in the direction of the longitudinal axis (16), wherein the stator (1) has energizable electric coils (12) and the armature (2) is excited by a permanent magnetic field which is periodic in the direction of the longitudinal axis (16), as well as with a position detection system (100; 200; 300; 400; 500) for detecting the position of the armature (2) relative to the stator (1), wherein the position detection system (100; 200; 300; 400; 500) is a contactless operating position detection system which is adapted to generate a signal that corresponds to the distance between a reference location (11a; 15a) on the stator (1) and a reference location (24a) on the armature (2) wherein the position detection system (100; 200; 300) has external magnetic field sensors (H₁₁ - H₂₈) arranged external to the stator (1) in a fixed spatial relation to the stator, which external magnetic field sensors are adapted for the detection of the permanent magnetic field of the armature (2) at the location of the respective magnetic field sensor and for the generation of signals which correspond to the respective detected permanent magnetic field, and are arranged offset relative to each other in the direction of the longitudinal axis (16) along the displacement path of the armature (2) in a manner such that a varying number of the external magnetic field sensors (H₁₁- H₂₈) are impinged by the periodic magnetic field of the armature depending on the position of the armature (2), **characterized in that** the position detection system (200) has internal magnetic field sensors (H_{A}; H_{B}) arranged within the stator (1) which are adapted for the detection of the permanent magnetic field of the armature (2) at the location of the respective magnetic field sensor and for the generation of signals which correspond to the respective detected permanent magnetic field and which are arranged offset relative to each other in the direction of the longitudinal axis (16) by one quarter of the length of the period (P) of the armature's (2) periodic permanent magnetic field in a manner such that they are impinged in any position of the armature (2) by the periodic permanent magnetic field thereof, and wherein the position detection system (200) comprises two rows of the external magnetic field sensors (H₂₁ - H₂₈), wherein the external magnetic field sensors (H₁₁ - H₁₈) of one row are arranged offset in longitudinal direction relative to the external magnetic field sensors (H₂₁ - H₂₈) of the other row by respectively a predetermined distance (d₆) in order to prevent that all external magnetic field sensors (H₁₁ - H₂₈) simultaneously measure no magnetic field in a critical position of the armature (2).

2. Linear motor according to claim 1, wherein the distance between each two adjacently and offset to each other arranged external magnetic field sensors (H₁₁ - H₂₈) within one row is half the length of a period (P) of the periodic permanent magnetic field of the armature (2).

3. Linear motor according to claim 1, wherein the external magnetic field sensors (H₁₁ - H₂₈) are adapted to detect both the strength as well as the polarity of the armature's (2) magnetic field, and wherein the distance between each two adjacently and offset to each other arranged external magnetic field sensors (H₁₁ - H₂₈) within one row is a full length of a period (P) of the periodic permanent magnetic field of the armature (2).

4. Linear motor according to any one of claims 1 to 3, wherein the predetermined distance (d₆) between the two rows is at least one eighth, preferably one quarter, of the period (P) of the periodic permanent magnetic field of the armature (2).

5. Linear motor according to any one of claims 1 to 4, wherein the linear motor is embodied as a tubular linear motor whose armature (2) is bar-shaped and extends through the stator (1), and wherein the armature (2) is movably arranged within and relative to the stator (1) in the direction of the longitudinal axis (16).

6. Linear motor according to claim 5, wherein the stator (1) at one end has a tubular extension (15) which encloses the armature (2).

7. Linear motor according to claim 6, wherein the external magnetic field sensors (H₁ - H₈; H₁₁ - H₂₈; H₁-H₉) are arranged inside the tubular extension (15).

## Revendications

1. Moteur linéaire comprenant un stator (1) ayant un axe longitudinal (16), et avec un armature (2) mobile par rapport au stator (1) en direction de l'axe longitudinale (16) entre deux positions finales, le stator (1) comportant des enroulements électriques (12) pouvant être alimentés en courant et l'armature (2) étant excité par un champ magnétique permanent périodique en direction de l'axe longitudinale (16), et avec un système de détection de position (100 ; 200 ; 300 ; 400 ; 500) pour la détection de la position de l'armature (2) relatif au stator (1), le système de détection de position (100 ; 200 ; 300 ; 400 ; 500) étant un système de détection de position sans contact, qui est configuré pour générer un signal qui correspond à une distance entre un point de référence (11a ; 15a) au stator (1) et un point de référence (24a) à l'armature (2), le système de détection de position (100 ; 200 ; 300) comportant des capteurs de champ magnétique externes (H₁₁-H₂₈) disposés à l'extérieur du stator (1) en relation spatiale fixe par rapport au stator, qui sont configurés pour la détection du champ magnétique permanent de l'armature (2) à l'endroit du capteur de champ magnétique respectif et pour la génération des signaux correspondants au champ magnétique permanent détecté respectif et étant disposés en direction de l'axe longitudinale (16) le long du trajet de déplacement de l'armature (2) de manière décalée les uns aux autres de telle sorte qu'un nombre différent de capteurs de champ magnétique externes (H₁₁-H₂₈) est sollicité par le champ magnétique périodique de l'armature en fonction de la position de l'armature (2), **caractérisé en ce que** le système de détection de position (200) comporte des capteurs de champ magnétique internes (H_{A}, H_{B}) disposés au sein du stator (1) qui sont configurés pour la détection du champ magnétique permanent de l'armature (2) à l'endroit du capteur de champ magnétique respectif et pour la génération des signaux correspondants au champ magnétique permanent détecté respectif et qui sont disposés de manière décalée les uns aux autres en direction de l'axe longitudinale (16) par un quart de la longueur de période (P) du champ magnétique permanent périodique de l'armature (2) de telle sorte qu'ils sont sollicités par le champ magnétique permanent périodique de l'armature (2) dans chaque position de celui-ci, et le système de détection de position (200) comportant deux rangées de capteurs de champ magnétique externes (H₂₁-H₂₈), les capteurs de champ magnétique externes (H₁₁-H₁₈) de la première rangée étant respectivement disposés de manière décalée en direction longitudinale par rapport aux capteurs de champ magnétique externes (H₂₁-H₂₈) de la deuxième rangée par une distance prédéfinie (d₆) pour éviter que tous les capteurs de champ magnétique externes (H₁₁-H₂₈) ne mesurent simultanément aucun champ magnétique dans une position critique de l'armature (2).

2. Moteur linéaire selon la revendication 1, dans lequel la distance entre chaque fois deux capteurs de champ magnétique externes (H₁₁-H₂₈) adjacentes décalés les uns aux autres au sein d'une rangée est d'une demi-longueur de période (P) du champ magnétique permanent périodique de l'armature (2).

3. Moteur linéaire selon la revendication 1, dans lequel les capteurs de champ magnétique externes (H₁₁-H₂₈) sont configurés pour détecter à la fois la force et la polarité du champ magnétique de l'armature (2), et la distance entre chaque fois deux capteurs de champs magnétique externes (H₁₁-H₂₈) adjacentes décalés les uns aux autres au sein d'une rangée étant d'une longueur de période (P) entière du champ magnétique permanent périodique de l'armature (2).

4. Moteur linéaire selon l'une des revendications 1 à 3, dans lequel la distance prédéfinie (d₆) entre les deux rangées est au moins un huitième, de préférence un quart d'une longueur de période (P) du champ magnétique permanent périodique de l'armature (2).

5. Moteur linéaire selon l'une des revendications 1 à 4, dans lequel le moteur linéaire est un moteur linéaire tubulaire dont l'armature (2) est en forme de tige passant par le stator (1), et l'armature (2) étant logé au sein du stator de manière coulissante relatif à celui-ci en direction de l'axe longitudinale (16).

6. Moteur linéaire selon la revendication 5, dans lequel le stator (1) comporte à une extrémité de celui-ci un prolongement tubulaire (15) qui entoure l'armature (2).

7. Moteur linéaire selon la revendication 6, dans lequel les capteurs de champ magnétique externes (H₁-H₈ ; H₁₁-H₂₈ ; H₁-H₉) sont disposés dans le prolongement tubulaire (15).
